## Europäisches Patentamt

## European Patent Office

## Office européen des brevets

(11) Publication number: **0 017 315**

**B1**

(12) **EUROPEAN PATENT SPECIFICATION**

(45) Date of publication of patent specification: **02.02.83**

(51) Int. Cl.³: **A 01 N 37/10**

(21) Application number: **80300348.2**

(22) Date of filing: **06.02.80**

(54) **Non-aqueous acaricidal composition which contains benzyl benzoate, a method for applying said composition and sheets impregnated therewith.**

(30) Priority: **07.02.79 GB 7904225**

(43) Date of publication of application:
**15.10.80 Bulletin 80/21**

(45) Publication of the grant of the patent:
**02.02.83 Bulletin 83/5**

(84) Designated Contracting States:
**AT BE CH DE FR IT LU NL SE**

(56) References cited:
**GB - A - 1 368 657**
**US - A - 1 953 629**

**CHEMICAL ABSTRACTS, vol. 51, no. 17, September 10, 1957 column 12558d, COLUMBUS, OHIO (US), & GODISHNIK SOFIISKIYA UNIV., FIZ-MAT. FAK., KNIGA, 1, MAT. I. FIZ. 49 CHAST 2, 179—84 (1954/55), (PUB. 1956), L. POPOV et al.: "A new immersion liquid".**

(73) Proprietor: **MORGAN-WARD CRITCHLEY & CO. LTD.**
**9, Mansfield Street**
**London W1M 9FH (GB)**

(72) Inventor: **Cleaver, David Frederick**
**20 Tanyard Drive**
**Hale Barns Altrincham, Cheshire (GB)**

(74) Representative: **Pennant, Pyers**
**Stevens, Hewlett & Perkins 5 Quality Court Chancery Lane**
**London, WC2A 1HZ (GB)**

**CHEMICAL ABSTRACTS, vol. 51, no. 2 January 25, 1957, column 1449f,g, COLUMBUS OHIO (US), & AM. J. TROP. MED. HYG. 5,713—36 (1956), G. W. HUNTER et al.: "Schistosomiasis. XII. Some ointments protecting mice against the cercariae of Schistosoma mansoni".**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

0017315

## Non-aqueous acaricidal composition which contains benzyl benzoate, a method for applying said composition and sheets impregnated therewith

This invention relates to acaricidal compositions, and to the use of such composition in the treatment of bedding and other materials.

House dust allergies take various forms, including principally asthma, but also skin and eye infections. It has been established by numerous authors that house dust allergy in a high proportion of cases is caused by the dermatophagoides family of acarine mites and that a beneficial effect can be expected from the eradication of the mites followed by a prevention of their recurrence. It is well known that the various species of mites, the dermatophagoides family, species culinae, pteronyssinus, the house mite glycyphagus domesticus and the flour mite acarus ciro are relatively nonsusceptible to normal insecticides such as pyrethrins and D.D.T. They are, however, known to be highly susceptible to certain acaricides such as benzyl benzoate which is widely used in the treatment of scabies and other such infestations. For this purpose, benzyl benzoate has conventionally been emulsified in water, in which it is insoluble, and the emulsion applied liberally to the patient's skin.

The mites in question live and breed largely in bedding materials, e.g. sheets, mattresses and blankets, and also house dust, floor coverings, fabric-covered furniture. They are also widely found in birds nests and therefore in feather materials and the skins of birds and mammals, which they also re-infect after those materials have been made up into products. It would be useful to treat such bedding and other materials so as either to kill mites coming in contact with them, or at least to prevent the mites from breeding there. One difficulty in such treatment arises from the fact that benzyl benzoate, though it does not boil until about 320°C, does have an appreciable vapour pressure at ambient temperatures. This vapour pressure is increased at the higher temperature taken up by the bedding when the bed is occupied. This also applies to skins and fabric materials etc. in warm climates. As a result, benzyl benzoate only gives temporary protection from mites, since in the course of time it evaporates away and is lost.

Compositions in which the rate of evaporation of benzyl benzoate is retarded are described in British Patent Specification No. 1,368,657, and include, in addition to the benzyl benzoate, a non-volatile polyalkylene glycol or a non-volatile ether or ester thereof. Polyethylene glycols having molecular weights above 2000 were preferred because they melt above body temperature and are non-sticky and non-hygroscopic. It was thought important to avoid using liquid carriers since these would make the bedding feel damp. Such compositions however have various disadvantages:—

a) The polyalkylene glycols are water-soluble and are therefore susceptible to moisture, e.g. from perspiration in bed. This may cause the glycol derivative, with or without the benzyl benzoate, to migrate, either away from the sleeping patient e.g. downwards into the mattress, or into contact with the patient's clothes and skin.

b) Since polyalkylene glycols are well known percataneous transportation agents, the benzyl benzoate that comes into direct contact with the patient's skin is liable to be adsorbed into his system.

c) Benzyl benzoate and polyethylene glycols, especially those of high molecular weight, are not very soluble one in the other, so mixtures are generally two-phase systems requiring a co-solvent to produce solutions suitable for spraying or dipping. The use of volatile co-solvents to achieve solutions of desired viscosity creates a major problem of toxicity and possibly flammability during manufacturing and/or spraying processes. The use of co-solvents is also necessary for compositions to be dispersed as aerosols.

d) Dilution of the active ingredient naturally means that a larger volume of the resulting composition has to be applied to achieve the same acaricidal effect. This is undesirable, both because of the added cost involved, and because the compositions tend, particularly when used in large amounts, to make bedding feel damp.

It is an object of the present invention to provide acaricidal compositions in which the rate of evaporation of benzyl benzoate is retarded but which avoid the above-mentioned disadvantages.

The present invention provides a non-aqueous acaricidal composition comprising benzyl benzoate with from 5% to 100% preferably 5% to 50%, particularly 10% to 25%, by weight on the weight of benzyl benzoate of at least one fatty acid ester miscible with the benzyl benzoate but substantially insoluble in water at 37°C, and an antifungal preservative. Suitable fatty acid esters include non-volatile natural fixed oils such as soya oil, corn oil and safflower oil and also other mono-, di- and polyesters of monomeric alcohols and anhydrides thereof including glycerol, sorbitol, sorbitan and isopropyl alcohol with fatty acids including myristic, palmitic, stearic oleic and linoleic acids, such as isopropyl myristate. The fatty acid ester may be solid or liquid depending on the requirements. As fatty acid esters of glycerol may be mentioned derivatives such as monopalmitate, monostearate, distearate and oleate.

It is surprising that the rate of evaporation of benzyl benzoate is considerably slowed down right from the start by the presence of relatively small amounts of the fatty acid ester.

The composition may contain other conventional ingredients, such as antioxidants and preservatives, in conventional amounts.

Goldshnik Soffiskiya Univ., Fiz.-Mat. Fak., Kniga 1, Mat. I, Fiz. 49, Chast 2, 179—84 (1954/55) (Year Book of the Faculty of Physics and Mathematics, Sofia University, Volume 49, 1954/55, Book 1,

**0 017 315**

Mathematics and Physics, Part 2 page 179—84) describes a new immersion liquid for microscope slides consisting of a mixture of castor oil and benzyl benzoate. There is no suggestion of using the liquid for acaricidal purposes. Immersion liquids for microscope slides would not contain antifungal preservative.

The invention also includes a method which comprises applying to materials which are infested, or are liable to infestation, by mites a non-aqueous acaricidal composition comprising benzyl benzoate with from 5% to 100% by weight on the weight of benzyl benzoate of at least one fatty acid ester miscible with the benzoate but substantially insoluble in water at 37°C at a rate sufficient to kill mites.

It was originally feared that the compositions, if used in the concentrations necessary to kill mites, would make the bedding feel damp, and would in this respect be inferior to compositions based on polyalkylene glycols. Surprisingly, this has proved not to be the case. The benzyl benzoate and the fatty acid ester appear to act synergistically, so that less benzyl benzoate is required to achieve a given acaricidal effect. Cloth may under some circumstances feel slightly smoother after treatment than before. But there is no adsorption or evaporation of moisture such as causes damp objects to feel cold. Thus, acaricidal concentrations of benzyl benzoate can be applied without making sheets or other bedding feel undesirably damp. Indeed the presence of benzyl benzoate may only be detectable by the slight odour.

Anti-fungal preservatives included reduce or eliminate Aspergillus fumigatus, another known cause of asthma. Preferred are hydroxybenzoates, e.g. butyl or benzyl hydroxybenzoate, at a concentration of 0.1% to 2.0%, particularly 0.5% by weight. This is a high level. The fact that the anti-fungal preservative level has to be so high in the generally hydrophobic retarded benzoate compositions makes it more surprising that the activity of such compositions against mites is increased by the retarder rather than decreased.

The compositions may be made up in a suitable form for application. For an aerosol spray, the composition may be dissolved in a volatile solvent and provided with a propellant such as nitrogen, carbon dioxide, hydrocarbon or fluorocarbon.

Alternatively, a retarder may be mixed with the benzyl benzoate and pressurised without the use of a solvent merely by adding a propellent such as dichlorodifluoromethane or a mixed propellent to give the required spray pressure.

Alternatively, a direct pressure system such as a collapsible inner container may be used in which the propellent provides pressure without actually coming into physical contact with the sprayed composition.

The formulation of an aerosol spray may be according to principles well known in the art.

Alternatively, a liquid mixture of benzyl benzoate and retarder may be applied as a spray to a sheet or mattress or other surface by atomisation by mechanical means.

For a solution into which sheets or other materials may be dipped, the composition may be dissolved in a volatile solvent, preferably one that is not excessively inflammable, for example chloroform or carbon tetrachloride. The dipped sheets may be dried in a current of warm air.

Alternatively the sheets may be dipped in a solution of benzyl benzoate and a liquid or liquid plus solid retarder such that the resulting solution is sufficiently fluid to allow immersion of the sheet, followed by removal of excess solution by draining or squeezing through rollers or similar means to ensure the required weight of benzyl benzoate solution per unit area of sheet.

Compositions and solutions thereof, which should be non-aqueous and sufficiently fluid to be applied to bedding or other materials, preferably consist essentially of 20 to 90% by weight of benzyl benzoate, from 1 to 45% by weight of fatty acid ester, and from 0 to 79% by weight of a volatile organic solvent.

Solutions of the compositions may be readily and uniformly applied to bedding or other materials by any convenient technique, e.g. spraying or dipping. It may be useful to apply the solution e.g. by calendering or spraying, during manufacture of the material. Mattresses, blankets, sheets and sheepskins are generally best treated by spraying. It may be useful to apply the material as a powder by using a high percentage of solidifying retarder and dispersing the whole in a suitable powder base such as talc or aerosil (silica powder). Treatment may be effected on any material where mites are liable to live or breed.

The rate of application depends to some extent on the nature of the substrate. Sheets treated with from 0.25 g to 25 g per sq. metre of benzyl benzoate have been proved lethal to mites. The application of more than 25 $g/m^2$ of benzyl benzoate to sheets is unlikely to provide significant added effect and application rates of 5 $g/m^2$ to 15 $g/m^2$ are likely to provide an acceptable compromise between cost on the one hand period of protection on the other. With thicker materials, such as blankets and sheepskins different rates of application will be suitable, while with mattresses and pillows other rates again will apply. The skilled worker will have no difficulty in determining optimum rates of application of benzyl benzoate in any particular instance, and these will generally be in the range 1 $g/m^2$ to 50 $g/m^2$.

The nature of the material to be treated is not critical to the invention. The compositions are effective on any of the commonly used textile materials, e.g. cotton, linen, wool, polyamide and polyester.

It appears that mites are only killed by physical contact with liquid or solid benzyl benzoate, and

3

**0017315**

not by contact with the vapour. It is therefore desirable to effect removal of at least the bulk of the mite infestation before applying the compositions of this invention to the bedding. The application of benzyl benzoate to infested bedding is of limited use, particularly as the mites are capable of causing asthma irrespective of whether they are alive or dead.

According to preferred procedure, therefore, the live and dead mites are removed from the patient's bed and bedding by taking all movable items such as sheets and blankets and washing them very thoroughly in a normal washing machine. The pillow is preferentially changed for a foam or terylene pillow to avoid a concentration of dust mites being inside the feathers of a feather pillow and the mattress and the surrounding areas are thoroughly cleaned with a vacuum cleaner, care being taken particularly with the areas under mattress buttons and down seams. Once this has been done, either the mattress or a piece of sheet which is placed over the mattress is sprayed with the contents of an aerosol can or hand spray container, or an impregnated sheet is placed over the mattress.

Clinical tests with the benzyl benzoate treated bedding in the presence of the retarder have shown patient acceptability to be extremely good.

The following Examples, which parts are by weight, illustrate compositions for use in the method for treatment of bedding and other materials.

Example 1

Solution suitable for dipping and roller squeezing to impregnate cloth during manufacture:—
1 part Geleol (a brand of glyceryl mono/distearate)
1 part corn oil
10 parts Benzyl Benzoate.

Example 2

Solution suitable for hand spray pump using mechanical break-up system such as an A.R.D. handpump:
1 part Geleol
9 parts Sunflower Oil
50 parts Benzyl Benzoate.

Example 3

Pressurised aerosol for application to a cloth surface:
40 parts Benzyl Benzoate
8 parts corn oil
25 parts Propellent 12.

Example 4

Low pressure domestic spray:
50 parts Benzyl Benzoate
10 parts Isopropyl myristate
74 parts Propellent 114.

Example 5

Machine spraying solution:
1 part Isopropyl myristate
5 parts Benzyl Benzoate.

Example 6

Comparative studies have been carried out on the rate of evaporation of benzyl benzoate:
a) Alone;
b) In the presence of 20% by weight of glyceryl monostearate.

Evaporation tests at 30°C in high volume ventilated chamber

|  | Initial | 2 days | 7 days | 10 days | 20 days |
|---|---|---|---|---|---|
| Benzyl benzo-ate alone | 100% | 90% | 84.5% | 82% | 79% |
| Benzyl benzo-ate+20% gly-ceryl mono-stearate | 100% | 96% | 91.75% | 90.75% | 90.25% |

Example 7

This experiment was performed to compare the effectiveness of pure benzyl benzoate with two

4

fatty acid esters containing compositions for control of house dust mites. The compositions tested were:—

A. Pure benzyl benzoate.

B. 10 parts benzyl benzoate 2 parts glyceryl mono/distearate.

C. 10 parts benzyl benzoate 2 parts isopropyl myristate.

Tests were carried out with the mite *Dermatophagoides farinae* from a laboratory colony. The mites were maintained on finely ground dog food and kept under optimal conditions at 25°C and 80% relative humidity.

The techniques used are described by Heller-Haupt and Busvine (J. Med. Ent. 1974 *11*, 551—558). The three compositions were tested over a range of 8 rates. The mortality was read after 24 hours exposure. Mortalities were plotted against log deposit rates and analysed by probit analyses using a CDC 7600 computer. The results obtained were as follows:—

| Composition | $LD_{99.9}$ (mg/m$^2$) | Average number of mites per dose |
|---|---|---|
| A | 260±30 | 261 |
| B | 217±20 | 225 |
| C | 242±30 | 223 |

The $LD_{99.9}$ figure is the dose required to kill 99.9% of the mites under specified conditions; the lower the figure, the more lethal the composition. It is striking that compositions B and C were both more lethal than pure benzyl benzoate, despite each containing only 83% of benzyl benzoate.

### Claims

1. A non-aqueous acaricidal composition comprising benzyl benzoate with from 5% to 100% by weight on the weight of benzyl benzoate of at least one fatty acid ester miscible with the benzyl benzoate but substantially insoluble in water at 37°C, and an antifungal preservative.

2. A composition as claimed in claim 1, wherein the proportion of fatty acid ester is from 5% to 50% by weight on the weight of the benzyl benzoate.

3. A composition as claimed in claim 1 or claim 2, containing from 0.1% to 2.0% by weight of a hydroxybenzoate antifungal preservative.

4. A composition as claimed in any one of claims 1 to 3, wherein the benzyl benzoate and the fatty acid ester are present in solution in a volatile organic solvent.

5. A method which comprises applying to materials which are infested, or are liable to infestation, by mites a non-aqueous acaricidal composition comprising benzyl benzoate with from 5% to 100% by weight on the weight of benzyl benzoate of at least one fatty acid ester miscible with the benzyl benzoate but substantially insoluble in water at 37°C, at a rate sufficient to kill mites.

6. A method as claimed in claim 5, wherein the rate of application is from 1 g/m$^2$ to 50 g/m$^2$ of benzyl benzoate.

7. A method as claimed in any one of claims 5 to 6, wherein the materials being treated are sheets or other bedding materials.

8. A method as claimed in claim 7, wherein the sheets or other bedding materials have been thoroughly washed prior to application of the composition.

9. A method as claimed in any one of claims 5 to 8, wherein the acaricidal composition is as claimed in any one of claims 1 to 4.

10. Sheets impregnated with a composition according to any one of claims 1 to 4 at a benzyl benzoate concentration of from 1 g/m$^2$ to 25 g/m$^2$.

### Revendications

1. Composition acaricide non aqueuse, comprenant du benzoate de benzyle avec 5 à 100% en poids par rapport au poids du benzoate de benzyle d'au moins un ester d'acide gras, miscible avec le benzoate de benzyle mais sensiblement insoluble dans l'eau à 37°C, et un agent de préservation antifongique.

2. Composition selon la revendication 1, dans laquelle la proportion de l'ester d'acide gras est de 5 à 50% en poids par rapport au poids du benzoate de benzyle.

3. Composition selon la revendication 1 ou 2, contenant 0,1 à 2,0% en poids d'un hydroxybenzoate à titre d'agent de préservation antifongique.

4. Composition selon l'une quelconque des revendications 1 à 3, dans laquelle le benzoate de benzyle et l'ester d'acide gras sont présents en solution dans un solvant organique volatil.

5. Procédé qui consiste à appliquer à des matières infestées ou susceptibles d'être infestées par des acariens, une composition acaricide non aqueuse comprenant du benzoate de benzyle avec 5 à 100% en poids par rapport au poids du benzoate de benzyle d'au moins un ester d'acide gras, miscible avec le benzoate de benzyle mais sensiblement insoluble dans l'eau à 37°C, en une proportion suffisante pour tuer les acariens.

6. Procédé selon la revendication 5, dans lequel le taux d'application du benzoate de benzyle est de 1 à 50 g/m².

7. Procédé selon la revendication 5 ou 6, dans lequel les matières à traiter sont des draps ou d'autres articles de literie.

8. Procédé selon la revendication 7, dans lequel les draps ou autres articles de literie ont été soigneusement lavés avant l'application de la composition.

9. Procédé selon l'une quelconque des revendications 5 à 8, dans lequel la composition acaricide est telle que définie dans l'une quelconque des revendications 1 à 4.

10. Draps imprégnés d'une composition selon l'une quelconque des revendications 1 à 4, avec une concentration de benzoate de benzyle de 1 à 25 g/m².

**Patentansprüche**

1. Nicht-wässerige acarizide Mischung, ethaltend Benzylbenzoat, mit 5 bis 100 Gew.-% auf Basis des Gewichtes von Benzylbenzoat an mindestens einem Fettsäureester, der mit dem Benzylbenzoat mischbar, aber in Wasser bei 37°C im wesentlichen unlöslich ist, und einem pilzbekämpfenden Konservierungsmittel.

2. Mischung nach Anspruch 1, in welcher die Menge an Fettsäureester von 5 bis 50 Gew.-% auf Basis des Gewichtes des Benzylbenzoats beträgt.

3. Mischung nach Anspruch 1 oder 2, enthaltend 0,1 bis 2,0 Gew.-% an einem pilzbekämpfenden Hydroxybenzoat-Konservierungsmittel.

4. Mischung nach einem der Ansprüche 1 bis 3, in welcher das Benzylbenzoat und der Fettsäureester in Lösung in einem flüchtigen organischen Lösungsmittel vorliegen.

5. Verfahren zur Aufbringung auf Materialien, die von Milben befallen sind oder befallen werden könnten, einer nicht-wässerigen acariziden Mischung, enthaltend Benzylbenzoat mit 5 bis 100 Gew.-% auf Basis des Gewichtes von Benzylbenzoat an mindestens einem Fettsäureester, der mit dem Benzylbenzoat mischbar ist, aber in Wasser bei 37°C im wesentlichen unlöslich ist, in einer für die Tötung von Milben ausreichenden Menge.

6. Verfahren nach Anspruch 5, bei welchem die Anwendungsmenge 1 bis 50 g/m² an Benzylbenzoat beträgt.

7. Verfahren nach einem der Ansprüche 5 und 6, bei welchem die behandelten Materialien Bettücher oder anderes Bettzeug sind.

8. Verfahren nach Anspruch 7, bei welchem die Bettücher oder das andere Bettzeug vor der Aufbringung der Mischung gründlich gewaschen wurden.

9. Verfahren nach einem der Ansprüche 5 bis 8, bei welchem die acarizide Mischung wie in einem der Ansprüche 1 bis 4 beansprucht beschaffen ist.

10. Bettücher, imprägniert mit einer Mischung nach einem der Ansprüche 1 bis 4 bei einer Konzentration an Benzylbenzoat von 1 bis 25 g/m².